# FASCICULE DE BREVET EUROPEEN

(11) **EP 3 553 945 B1**
(45) Date de publication et mention de la délivrance du brevet: **02.08.2023**
(21) Numéro de dépôt: 19168339.0
(22) Date de dépôt: 10.04.2019
(51) Int. Cl.: H02S 20/25, H02S 40/34

(54) **TUILE A EMBOITEMENT ET ENSEMBLE DE TOITURE ASSOCIE**
DACHZIEGEL MIT STECKVERBINDUNG UND ENTSPRECHENDE GESAMTHEIT DER DACHABDECKUNG
NESTING TILE AND ASSOCIATED ROOF ASSEMBLY

(30) Priorité: 11.04.2018 FR 1853168
(43) Date de publication de la demande: 16.10.2019
(73) Titulaire: Edilians, 69570 Dardilly (FR)
(72) Inventeur: MARTINAT, Eric, 01600 TREVOUX (FR)
(74) Mandataire: Germain Maureau

(56) Documents cités:
- EP-A2- 1 071 137
- WO-A2-2012/120208
- DE-A1- 1 900 069
- DE-A1- 4 227 929
- JP-A- 2000 226 908
- JP-A- 2002 115 372
- US-A1- 2004 221 886
- US-A1- 2012 240 490

## Description

La présente invention concerne le domaine des toitures dites en pente réalisées en tuiles à emboîtement en terre cuite, mais également en béton, voire en matériau composite et plus particulièrement sur l'intégration de panneaux photovoltaïques sur des tuiles.

Classiquement, une tuile à emboîtement comprend un corps galbé ou ondulé ou plat, ledit corps présentant un bord de tête, un bord de pied ou nez, opposé au bord de tête, et deux bords latéraux opposés reliant le bord de tête au bord de pied. De manière connue, la tuile à emboîtement comprend au moins un organe d'emboitement s'étendant au moins partiellement le long d'un bord latéral et conformé pour coopérer avec une tuile adjacente positionnée latéralement sur ou sous ladite tuile à emboîtement. En outre, classiquement, le bord de tête est équipé d'une portion d'emboitement s'étendant au moins partiellement sur ledit bord de tête et configuré pour coopérer avec une portion inférieure ou avec le bord de pied d'une tuile supérieure. Ainsi, pour une tuile donnée, il existe un recouvrement sur au moins deux bords : le bord de tête et l'un des bords latéraux. Avantageusement, certaines tuiles à emboîtement permettent une variation du pas latéral de mise en oeuvre permettant une adaptation précise aux différentes géométries de toiture.

Selon l'invention, on entend par « tuile standard » une tuile de plain carré sans les aménagements prévus selon l'invention.

Selon l'invention, on entend par « tuile à emboîtement selon l'invention » une tuile de plain carré présentant les aménagements prévus par l'invention.

Selon l'invention, on entend par « tuile plain carré » un élément de construction utilisé dans le bâtiment comme pièce de couverture de bâtiment, et est couramment dénommée tuile de plain carré. Les éléments dont la forme permet une finition de la toiture, comme le faîtage, le contour de cheminée, les bordures, les demi-tuiles pour une pose « croisée », les tuiles chatières de ventilation, les tuiles en verre pour laisser pénétrer la lumière du jour dans certaines parties du toit, sont des tuiles accessoires. Par définition, bien qu'elles coopèrent avec les tuiles de plain carré et qu'elles reproduisent l'une ou l'autre partie des formes des tuiles de plain carré, les tuiles accessoires ne peuvent pas, de par leur forme et leur fonction, couvrir à elles seules le toit contrairement aux tuiles de plain carré.

Il existe plusieurs façons connues d'équiper une toiture de panneaux photovoltaïques. Par exemple, selon une première solution, on peut implanter des panneaux photovoltaïques en surimposition d'une toiture. Cependant cette solution ne tient pas compte de l'esthétisme global du toit et la fixation des panneaux peut compromettre l'étanchéité de la toiture car elle requiert de traverser la couche de tuiles avec les attaches. Une autre solution consiste à coupler chaque tuile avec un capteur photovoltaïque. Le couplage peut se faire de manière intégrée : la tuile présentant un logement recevant le capteur ou bien de manière superposée : le capteur est plaqué sur la tuile qui est dimensionnée pour recevoir le capteur. Cette autre solution présente l'inconvénient d'être couteuse puisque chaque tuile nécessite une connectique individuelle et le format des tuiles doit être adapté pour devenir compatible avec les dimensions standard des capteurs photovoltaïques, la toiture est alors composée de tuiles génériques et de tuiles spéciales. En outre, dans cette autre solution, la connectique n'est pas gérée de façon satisfaisante : soit chaque tuile est percée pour faire déboucher dans son dos les éléments de connectique, et dans ce cas, on crée localement une rupture de la couche étanche formée par les tuiles soit, on fait courir les câbles de connexion jusqu'à une zone de jonction avec une tuile adjacente, que l'on aura aménagée spécialement pour laisser passer les câbles dans l'emboitement sans perturber l'emboitement et l'étanchéité. Les câbles sont alors soumis aux agressions extérieures (rayonnement du soleil ou rayonnements UV, coups de bec d'oiseaux, morsures de rongeurs) et vieillissent prématurément.

EP 1071137 A2 décrit une décrit une tuile de toiture à emboitement comprenant un dispositif de retenue d'au moins une partie d'un module photovoltaïque.

L'invention a pour but de remédier à tout ou partie des inconvénients précités et notamment à proposer une pluralité de tuiles à emboitement permettant la pose et l'intégration d'un panneau photovoltaïque sur une toiture tout en protégeant les éléments de connectique du panneau photovoltaïque des agressions extérieures et en garantissant un montage sur le toit très rapide, aussi simple que la pose des tuiles en elles-mêmes et respectant l'esthétique globale et l'étanchéité du toit.

L'invention a donc pour objet une tuile de toiture à emboitement selon l'objet de la revendication 1.

La tuile à emboîtement selon l'invention permet de conserver l'esthétique des tuiles de la toiture tout en permettant la fixation simple et le maintien discret d'un module photovoltaïque sur la toiture sans compromettre l'étanchéité de la toiture. En effet, comme le logement est réalisé dans le corps de la tuile, la forme générale et les dimensions extérieures de la tuile sont conservées, de fait, ladite tuile selon l'invention s'insère dans la toiture de manière esthétiquement homogène, et avec la même garantie d'étanchéité que les autres tuiles de la toiture. Avantageusement, le dispositif de retenue présente un volume interne conformé pour loger et guider la connectique du module photovoltaïque hors de la toiture, ce qui permet de conserver l'étanchéité de la toiture de manière continue et durable. Grâce à cette configuration de tuile, l'usage de tuiles individuelles sur toute la toiture et la possibilité de faire varier librement le pas latéral (longitudinal) des tuiles, sont préservés.

Selon l'invention, on entend par « module photovoltaïque » un élément qui fonctionne comme un générateur électrique de courant continu en présence de rayonnement solaire, constitué d'un ensemble de cellules photovoltaïques reliées entre elles électriquement. Les cellules disposées en au moins une rangée, selon une méthode d'intégration déjà connue, sont insérées entre une couche de verre en face supérieure, et un film isolant en face inférieure. L'ensemble verre-cellules-film a préalablement été assemblé en un ensemble rendu étanche, et se présente globalement comme une plaque de verre d'environ 5mm d'épaisseur, munie en son dos d'une sortie des câbles de raccordement, étanche également.

Selon l'invention, on entend par « connectique » toutes les techniques liées aux connexions physiques des liaisons électriques non insérées à l'intérieur des modules ainsi que des conducteurs d'énergie, c'est-à-dire les connecteurs et câbles.

Selon une caractéristique de l'invention, le logement est conformé pour recevoir en encastrement partiel ou total le dispositif de retenue.

Selon une caractéristique de l'invention, le logement comprend une première partie de logement, dite partie centrale de logement, s'étendant sur la portion centrale du corps de la tuile.

Selon une caractéristique de l'invention, le logement comprend une deuxième partie, dite partie de tête de logement, contiguë à la partie centrale de logement, et se présentant sous la forme d'un canal s'étendant depuis la partie centrale de logement, jusqu'au bord de tête de la tuile.

Selon une caractéristique de l'invention, le logement est un évidement borgne dans le corps de la tuile. Avantageusement, le logement s'apparente à un décaissement partiel du corps de la tuile. Ainsi, les aménagements sur la tuile sont majoritairement limités au logement, ce qui permet de ne pas impacter l'étanchéité de la tuile.

Selon une caractéristique de l'invention, le logement peut se voir complété par une troisième partie, dite partie de pied de logement, ménagée sur la surface de la tuile en direction du bord de pied, et suivant les cas jusqu'au bord de pied de la tuile et présentant une surface plane en légère surélévation ou en léger encaissement ou à la surface de la tuile.

Selon une caractéristique de l'invention, le dispositif de retenue comprend au moins une première pièce de retenue dite pièce inférieure de retenue, configurée pour être fixée dans le logement.

Selon une caractéristique de l'invention, le premier élément de retenue est agencé sur la pièce inférieure de retenue.

Selon une caractéristique de l'invention, la pièce inférieure de retenue de retenue se présente sous la forme d'une languette allongée comprenant une première portion destinée à occuper le logement et préférentiellement configurée pour occuper au moins partiellement la partie centrale du logement. Encore plus préférentiellement, la première portion de la pièce inférieure de retenue de retenue est positionnée en partie dans la partie centrale de logement et en partie dans la partie de tête de logement.

Selon une caractéristique de l'invention, la pièce inférieure de retenue de retenue du dispositif de retenue comprend une deuxième portion conformée pour occuper la partie de tête du logement. Avantageusement, la pièce inférieure de retenue de retenue est aménagée pour arrêter les infiltrations d'eau éventuelles qui tenteraient de remonter par capillarité vers le bord de tête de la tuile.

Selon une caractéristique de l'invention, la première portion et la deuxième portion de la pièce inférieure de retenue de retenue sont planes et coplanaires.

Selon une caractéristique de l'invention, la pièce inférieure de retenue de retenue comprend une troisième portion, alignée avec la première portion de la pièce inférieure de retenue de retenue et opposée à la deuxième portion de la pièce inférieure de retenue de retenue par rapport à la première portion de la pièce inférieure de retenue de retenue, et destinée et conformée à se loger sur la partie plane de la portion inférieure de la tuile et/ou directement sur la portion inférieure de la tuile.

Selon une caractéristique de l'invention, la troisième portion de la pièce inférieure de retenue de retenue est conformée pour occuper au moins partiellement la partie de pied du logement.

Selon une caractéristique de l'invention, la troisième portion de la pièce inférieure de retenue de retenue est plane et s'étendant dans un plan sensiblement parallèle au plan dans lequel la première portion de la pièce inférieure de retenue de retenue s'étend.

Selon une caractéristique de l'invention, la troisième portion de la pièce inférieure de retenue de retenue comprend une extrémité libre sur laquelle est agencée le premier élément de retenue.

Selon une caractéristique de l'invention, le premier élément de retenue se présente sous la forme d'un crochet et est orienté vers la portion centrale et la portion supérieure de la tuile.

Selon une caractéristique de l'invention, le premier élément de retenue est configuré pour recevoir un premier bord du module photovoltaïque et de maintenir ledit premier bord uniquement par encastrement dudit premier bord dans le premier élément de retenue.

Selon une caractéristique de l'invention, la pièce inférieure de retenue est fixée dans le logement de la tuile préférentiellement de manière permanente par exemple par collage.

Selon une caractéristique de l'invention, le dispositif de retenue comprend au moins une deuxième pièce de retenue dite pièce supérieure de retenue, reliée à la pièce inférieure de retenue et délimitant avec la pièce inférieure de retenue le volume interne du dispositif de retenue. Avantageusement, la pièce supérieure de retenue est agencée à distance de la pièce inférieure de retenue. Selon cette configuration, le dispositif de retenue avec la création de ce volume interne permet de recréer le volume de la portion centrale de la tuile et partiellement le profil de la face extérieure afin de maintenir l'étanchéité.

Selon une caractéristique de l'invention, la pièce supérieure de retenue se présente sous la forme globale d'une languette.

Selon une caractéristique de l'invention, la pièce supérieure de retenue comprend une première portion configurée pour être agencée en regard de la première portion de la pièce inférieure de retenue.

Selon une caractéristique de l'invention, la pièce supérieure de retenue comprend en outre une deuxième portion positionnée vers le bord de tête de la tuile, et agencée dans le prolongement de la première portion de la pièce supérieure de retenue.

Selon une caractéristique de l'invention, la pièce supérieure de retenue comprend, à une extrémité, un retour orienté vers la première portion de la pièce supérieure de retenue. Avantageusement, le retour permet de stopper les éventuelles infiltrations poussées par le vent.

Optionnellement, la deuxième portion de la pièce supérieure de retenue comprend en outre, sur au moins une partie de sa longueur, au moins une ailette agencée latéralement par rapport à la deuxième portion et configurée pour fermer partiellement le volume interne. Préférentiellement, la pièce supérieure de retenue comprend deux ailettes positionnées de part et d'autre de la deuxième portion de ladite pièce supérieure de retenue.

Selon une caractéristique de l'invention, la première portion de la pièce supérieure de retenue et la deuxième portion de la pièce supérieure de retenue s'étendent dans des plans parallèles.

Selon une caractéristique de l'invention, le deuxième élément de retenue est agencé sur la pièce supérieure de retenue et préférentiellement sur l'extrémité libre de la première portion de la pièce supérieure de retenue.

Selon une caractéristique de l'invention, le deuxième élément de retenue se présente sous la forme d'une extension et est orienté vers la portion centrale et la portion inférieure de la tuile.

Selon une caractéristique de l'invention, le deuxième élément de retenue est configuré pour recevoir un deuxième bord du module photovoltaïque et de maintenir ledit deuxième bord uniquement par encastrement dudit deuxième bord dans le deuxième élément de retenue.

Selon une caractéristique de l'invention, la pièce supérieure de retenue peut se présenter sous la forme d'un cavalier.

Selon une caractéristique de l'invention, la deuxième portion de la pièce supérieure de retenue est destinée à coopérer avec une tuile de la toiture d'un rang supérieur à celui de la tuile selon l'invention. Préférentiellement, le dispositif de retenue coopère directement avec tuile de la toiture d'un rang supérieur et destinée à être positionnée au moins partiellement sur la tuile selon l'invention. Avantageusement, la tuile de la toiture d'un rang supérieur recouvre partiellement la tuile selon l'invention de manière à sécuriser la fermeture du dispositif de retenue.

Selon une forme de réalisation de l'invention, le dispositif de retenue peut être réalisé en une pièce d'un seul tenant. Dans cette forme de réalisation, la pièce inférieure de retenue et la pièce supérieure de retenue sont réalisées d'un seul tenant sous la forme d'un profilé estampé.

Selon une caractéristique de l'invention, le dispositif de retenue comprend au moins un élément de liaison, préférentiellement deux éléments de liaison, configuré pour relier la pièce inférieure de retenue avec la pièce supérieure de retenue. Selon une caractéristique de l'invention, chaque élément de liaison s'étend en saillie depuis la première portion de la pièce inférieure de retenue dans un plan sensiblement perpendiculaire à celui et rejoignant la première portion de la pièce supérieure de retenue.

Alternativement, le dispositif de retenue peut être réalisé en au moins deux pièces jointes ensemble. Dans cette forme de réalisation alternative, la pièce inférieure de retenue constitue une pièce distincte de la pièce supérieure de retenue, la liaison des deux pièces de retenue étant soit modifiable soit permanente.

Selon l'invention, on entend par « liaison modifiable », une liaison qui permet une amovibilité des pièces jointes l'une par rapport à l'autre ou bien un détachement temporaire des pièces jointes, par exemple par coopération de forme complémentaire de type : clippage, frottement, encastrement, etc.

Selon l'invention, on entend par « liaison permanente », une liaison qui est à demeure de manière à empêcher un détachement facile des deux pièces l'une avec l'autre, par exemple : collage, soudure, vissage, etc.

Selon une caractéristique de l'invention, la pièce inférieure de retenue comprend en outre au moins un élément de liaison configuré pour relier la pièce inférieure de retenue avec la pièce supérieure de retenue.

Selon une caractéristique de l'invention, le au moins élément de liaison s'étend en saillie depuis la première portion de la pièce inférieure de retenue dans un plan sensiblement perpendiculaire à celui dans lequel la première portion de la pièce inférieure de retenue s'étend.

Selon une caractéristique de l'invention, le au moins un élément de liaison est conformé pour coopérer par complémentarité de forme avec un élément de liaison complémentaire équipant la pièce supérieure de retenue.

Selon une caractéristique de l'invention, la pièce inférieure de retenue comprend deux éléments de liaison, disposés de part et d'autre de la première portion de la pièce inférieure de retenue.

Selon une caractéristique de l'invention, chaque élément de liaison est conformé pour coopérer avec un élément de liaison complémentaire équipant la pièce supérieure de retenue.

Selon une caractéristique de l'invention, la pièce supérieure de retenue comprend en outre au moins un élément de liaison complémentaire configuré pour relier la pièce supérieure de retenue avec la pièce inférieure de retenue.

Selon une caractéristique de l'invention, le au moins élément de liaison complémentaire s'étend en saillie depuis la première portion de la pièce supérieure de retenue dans un plan sensiblement perpendiculaire à celui dans lequel la première portion de la pièce supérieure de retenue s'étend.

Selon une caractéristique de l'invention, le au moins un élément de liaison complémentaire est conformé pour coopérer par complémentarité de forme avec un élément de liaison équipant la pièce inférieure de retenue.

Selon une caractéristique de l'invention, la pièce supérieure de retenue comprend deux éléments de liaison complémentaires, disposés de part et d'autre de la première portion de la pièce supérieure de retenue.

Selon une caractéristique de l'invention, chaque élément de liaison complémentaire est conformé pour coopérer avec un élément de liaison équipant la pièce inférieure de retenue.

Selon une caractéristique de l'invention, la pièce supérieure de retenue est clippée sur la pièce inférieure de retenue via le ou les éléments de liaison.

Selon une caractéristique de l'invention, la première portion de la pièce inférieure de retenue équipée d'éléments de liaison présente une section transversale en forme de U.

Selon une caractéristique de l'invention, la première portion de la pièce supérieure de retenue équipée d'éléments de liaison présente une section transversale en forme de U inversé.

Selon une caractéristique de l'invention, la tuile comprend un premier bord latéral et un deuxième bord latéral.

Selon une caractéristique de l'invention, le premier bord latéral et le deuxième bord latéral sont agencés en regard l'un de l'autre et relient le bord de tête au bord de pied.

Selon une caractéristique de l'invention, le premier bord latéral comprend au moins un premier organe d'emboitement.

Selon une caractéristique de l'invention, le premier organe d'emboitement se présente sous la forme d'une ailette saillante s'étendant latéralement depuis le corps de la tuile.

Selon une caractéristique de l'invention, le deuxième bord latéral comprend un deuxième organe d'emboitement.

Selon une caractéristique de l'invention, la tuile comprend une surface intérieure et une surface extérieure opposée à la face intérieure.

Selon l'invention, on entend par « surface intérieure d'une tuile » la surface agencée en regard de l'écran d'étanchéité et/ou de la charpente de la toiture.

Selon une caractéristique de l'invention, le deuxième organe d'emboitement est positionné sur la surface intérieure de la tuile.

Selon une caractéristique de l'invention, le corps de la tuile peut être galbé ou ondulé ou plat.

Selon une caractéristique de l'invention, lorsque la tuile est galbée, le corps de la tuile comprend un galbe longitudinal de forme globale tronconique ou cylindrique.

Selon une caractéristique de l'invention, en position de montage, lorsque le dispositif de retenue est logé dans le logement, la pièce supérieure de retenue forme un méplat sur le galbe de la tuile.

Selon une caractéristique de l'invention, la tuile comprend en outre une partie plane ménagée sur la portion inferieure de la tuile, la partie plane étant agencée tangentiellement au galbe de la portion inférieure de la tuile.

Selon une caractéristique de l'invention, la partie plane est positionnée préférentiellement au sommet du galbe de la portion inférieure de la tuile.

L'invention a également pour objet un ensemble de toiture comprenant au moins une tuile selon l'invention et un module photovoltaïque comprenant une connectique et au moins un premier bord et un deuxième bord opposé audit premier bord, ledit module photovoltaïque étant agencé au moins en partie tangentiellement ou sur la tuile selon l'invention, de sorte que le volume interne du dispositif de retenue de la tuile selon l'invention est conformé pour loger au moins partiellement la connectique du module photovoltaïque et le premier élément de retenue et le deuxième élément de retenue étant configurés pour coopérer respectivement avec le premier bord du module photovoltaïque et le deuxième bord du module photovoltaïque.

Selon l'invention, on peut adapter un module photovoltaïque sur une ou plusieurs tuiles selon l'invention tout en préservant la capacité de la variation de pas de mise en oeuvre des tuiles sur le toit, par rapport à l'axe longitudinal du toit et également par rapport à un axe transversal du toit.

Selon une caractéristique de l'invention, l'ensemble comprend au moins deux tuiles selon l'invention à distance l'une de l'autre ou adjacentes latéralement de sorte que le module photovoltaïque est maintenu par au moins deux dispositifs de retenue équipant chacun une tuile selon l'invention.

Dans la présente invention et en règle générale, on parle de « largeur » et de « longueur » d'éléments de toiture, tels que des tuiles par exemple ou des modules photovoltaïques, en fonction du toit : la longueur du toit étant définie du haut du toit vers le bas du toit et la largeur étant définie d'un côté à l'autre du toit. Ainsi, un élément de toiture présente une longueur définie non pas par le côté le plus long dudit élément de toiture mais par son orientation de montage sur le toit mais du bord orienté vers le haut du toit vers le bord orienté vers le bas du toit ; la largeur de l'élément de toiture étant défini d'un bord orienté vers un premier côté du toit au bord opposé orienté vers le deuxième côté du toit.

Selon une caractéristique de l'invention, chaque tuile de l'ensemble est conformée pour permettre une variation d'un entraxe latéral avec une tuile adjacente. En effet, grâce au premier organe d'emboitement venant se loger sous le corps de la tuile adjacente et coopérer un organe d'emboitement complémentaire, il est possible de faire varier latéralement la distance entre les corps de chaque tuile, ce qui permet d'adapter le nombre de tuiles par rang en fonction de la géométrie, parfois irrégulière, du toit à couvrir.

Avantageusement, en fonction de la largeur relative du module photovoltaïque vis-à-vis de celle de la ou les tuiles selon l'invention, chaque module photovoltaïque repose sur une ou plusieurs tuiles selon l'invention, encadrant, suivant les cas, une ou plusieurs tuiles standard.

Avantageusement, en fonction de la longueur du module photovoltaïque vis-à-vis de celle de la ou les tuiles, le module photovoltaïque peut s'étendre sur une seule tuile longitudinalement, mais préserve la capacité à faire varier sa position longitudinale d'un rang successif sur le rang précédent.

On positionne les tuiles standards de la toiture et on sélectionne les zones de positionnement du module photovoltaïque. En fonction de la sélection des zones et de la taille du module photovoltaïque, on place des tuiles selon l'invention sur au moins un rang de tuile. Lorsque le rang « n » été équipé d'un module photovoltaïque, on ne peut monter le rang « n+1 » qu'une fois le rang « n » entièrement monté, les pièces supérieures de retenue montées et verrouillées et les éléments de liaison entre les pièces de retenue connectés, puisque le rang « n+1 », c'est-à-dire supérieur recouvre définitivement les pièces supérieures de retenue et les connecteurs, etc.

Une fois le ou les rangs de tuiles couverts de tuiles standards et de tuiles à emboîtement selon l'invention munies de leur pièce inférieure de retenue de retenue préinstallée, on encastre le module photovoltaïque dans les éléments de retenue prévus à cet effet, et on glisse la connectique du module dans le dispositif de retenue équipant l'une des tuiles spécifiques à l'invention. Puis, on ferme le volume interne de chaque tuile à emboîtement selon l'invention avec sa pièce supérieure de retenue de retenue.

Les raccordements électriques propres à la rangée sont faits avant recouvrement de ces raccordements par le rang supérieur suivant.

Enfin, on sécurise le dispositif de retenue de chaque tuile spécifique à l'invention en plaçant les tuiles du rang supérieur pour compléter la toiture. Ces tuiles peuvent elles-mêmes être des tuiles aménagées avec système de retenue.

Selon une caractéristique de l'invention, le module photovoltaïque utilisé dans l'invention, est préférentiellement constitué d'un certain nombre de cellules réceptrices encapsulées entre une feuille de verre, et un film plastique isolant, la connectique étant disposée au dos du film plastique isolant.

Selon une caractéristique de l'invention, les zones de contact entre le module photovoltaïque et respectivement les pièces du dispositif de retenue seront couvertes d'une substance d'absorption de chocs telle qu'un matériau déformable élastique de type élastomère pour éviter la dégradation par érosion locale du module photovoltaïque et permettant de palier les différences de planéité et d'augmenter les frottements avec le module photovoltaïque.

Avantageusement, la fixation du module photovoltaïque sur la ou les tuiles selon l'invention est simple et rapide en mise en oeuvre sur le toit, et assez résistante pour supporter les efforts induits par la prise au vent. La fixation des pièces supérieures de retenue sur les pièces inférieures de retenue est telle que seule une action humaine et volontaire peut générer la séparation de ces pièces et le désengagement des modules. Le maintien des modules est donc assuré de manière pérenne dans le temps.

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous :
- La figure 1 est une en perspective de la tuile à emboîtement selon l'invention sans dispositif de retenue,
- La figure 2 est une vue en perspective éclatée du dispositif de retenue selon l'invention,
- La figure 3 est une vue en perspective éclatée de la tuile à emboîtement selon l'invention,
- La figure 4 est une vue en perspective d'un ensemble selon l'invention,
- La figure 5 est une vue partielle en perspective d'une toiture équipée d'un ensemble selon l'invention,
- La figure 6 est une vue en coupe selon l'axe A-A de la figure 5.

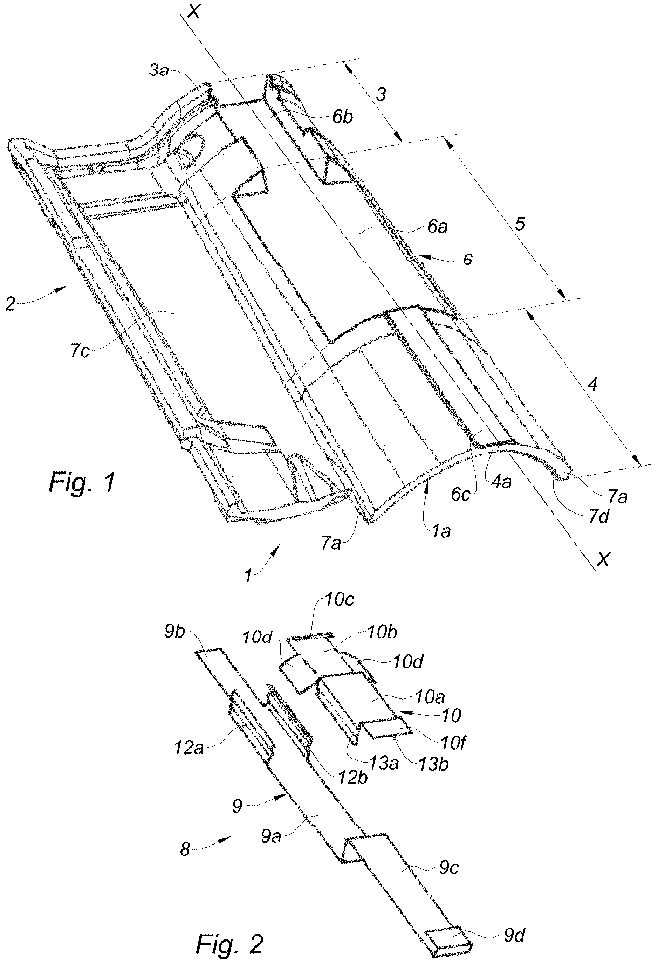

Conformément à l'invention, la tuile à emboîtement 1 comprend un corps 2 présentant une portion supérieure 3 sur laquelle est ménagé un bord de tête 3a, une portion inférieure 4 sur laquelle est ménagé un bord de pied 4a opposé au bord de tête 3a et une portion centrale 5 agencée entre la portion supérieure 3 et la portion inférieure 4, comme illustré en figure 1. En outre, la tuile 1 comprend un premier bord latéral 7a et un deuxième bord latéral 7b. Le premier bord latéral 7a et le deuxième bord latéral 7b sont agencés en regard l'un de l'autre et relient le bord de tête 3a au bord de pied 4a. Avantageusement, le premier bord latéral 7a comprend au moins un premier organe d'emboîtement 7c, qui se présente sous la forme d'une ailette saillante s'étendant latéralement depuis le corps 2 de la tuile 1. Le long du premier bord latéral 7a. De plus, le deuxième bord latéral 7b comprend un deuxième organe d'emboîtement 7d positionné sur la surface intérieure de la tuile 1.

En figure 1, la tuile 1 comprend en outre un logement 6 s'étendant au moins partiellement au moins dans la portion centrale 5 selon un axe longitudinal X-X de la tuile. Plus particulièrement et comme illustré en figure 1, le logement 6 comprend une première partie dite partie centrale de logement 6a s'étendant sur la portion centrale 5 du corps 2 de la tuile 1 et une deuxième partie dite partie de tête de logement 6b contiguë à la partie centrale de logement 6a. Avantageusement, la partie de tête de logement 6b se présente sous la forme d'un canal s'étendant depuis la partie centrale de logement 6a de logement 6 jusqu'au bord de tête 3a de la tuile 1. Comme représenté en figure 1, le logement 6 est un évidement borgne dans le corps 2 de la tuile 1.

Selon l'invention, le corps 2 de la tuile 1 peut être galbé ou ondulé ou plat. Dans les exemples illustrés, les tuiles présentent un galbe 1a mais cet exemple et non limitatif et les caractéristiques de l'invention sont compatibles avec des formes différentes de corps 2 de tuile 1. Ainsi, lorsque la tuile 1 est galbée, la tuile 1 comprend en outre une troisième partie dite partie de pied de logement 6c ménagée sur la portion inférieure 4 de la tuile 1, la partie de pied de logement est une partie plane ou une partie creusée 6c agencée tangentiellement au galbe 1a de la portion inférieure 4 de la tuile 1. Comme illustré en figure 1, la partie de pied de logement 6c est positionnée préférentiellement au sommet du galbe 1a de la portion inférieure 4.

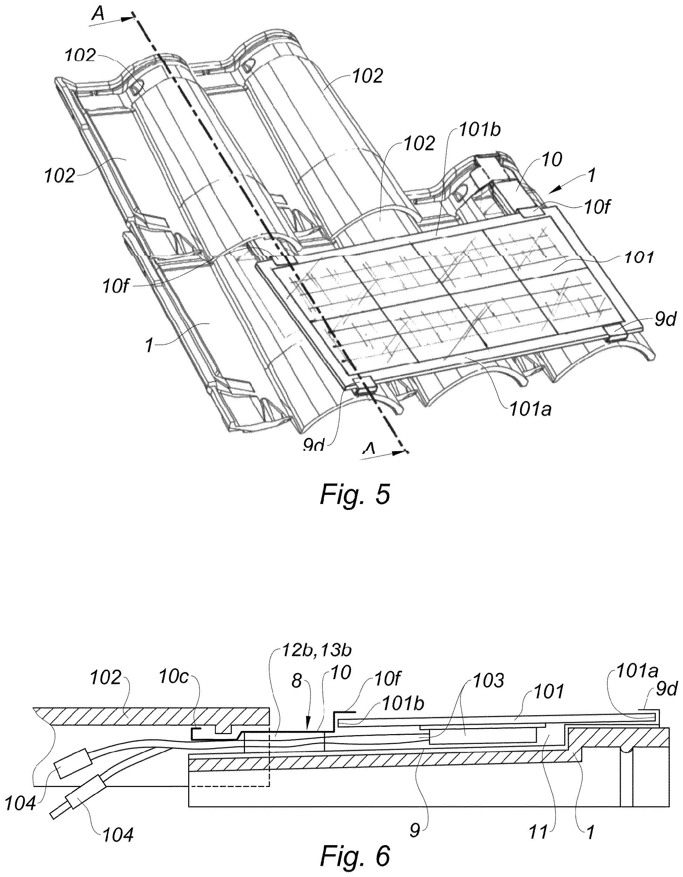

Selon l'invention, la tuile 1 comprend un dispositif de retenue 8 d'au moins une partie d'un module photovoltaïque 101, ledit dispositif de retenue 8 étant conformé pour être logé au moins partiellement dans le logement 6 de manière à combler au moins partiellement, et préférentiellement entièrement, le logement 6. En figure 2 est illustré le dispositif de retenue 8 destiné à être introduit dans le logement 6 de la tuile 1 comme on le verra par la suite. Le dispositif de retenue 8 comprend une pièce inférieure de retenue 9 configurée pour être fixée dans le logement 6 de la tuile 1 et une pièce supérieure de retenue 10 reliée à la pièce inférieure de retenue 9 et délimitant avec cette dernière, un volume interne 11 (visible en figure 6), que l'on détaillera plus loin dans la description.

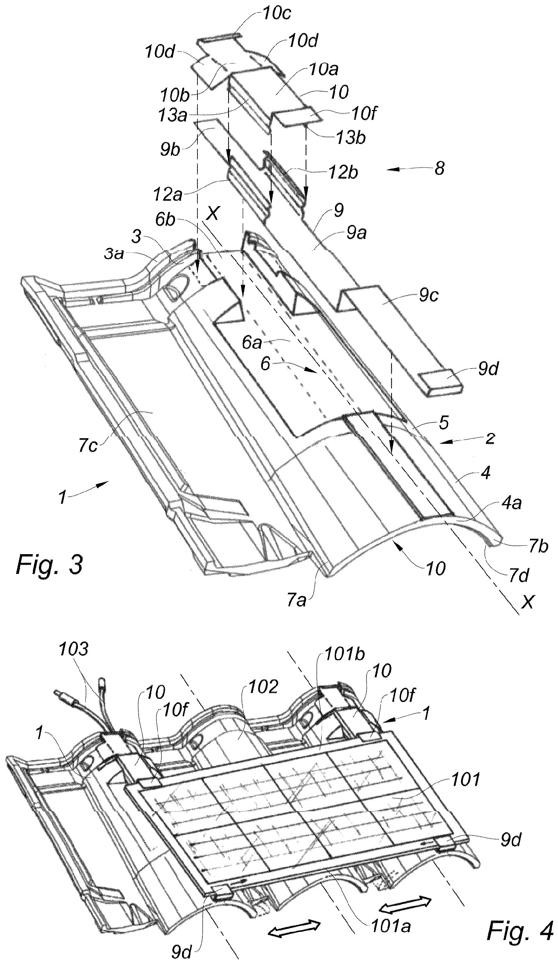

Comme on peut le voir en figure 2, la pièce inférieure de retenue 9 se présente sous la forme d'une languette allongée comprenant une première portion 9a destinée à occuper le logement 6 et préférentiellement configurée pour occuper au moins partiellement la partie centrale de logement 6a et plus particulièrement au moins en partie la partie centrale de logement 6a et au moins en partie la partie de tête de logement 6b. La pièce inférieure de retenue 9 comprend une deuxième portion 9b conformée pour occuper la partie de tête de logement 6b. Avantageusement, la première portion 9a et la deuxième portion 9b de la pièce inférieure de retenue 9 du dispositif de retenue 8 sont planes et coplanaires. En outre, la pièce inférieure de retenue 9 comprend une troisième portion 9c, alignée avec la première portion 9a de la pièce inférieure de retenue 9 et opposée à la deuxième portion 9b de la pièce inférieure de retenue 9 par rapport à la première portion 9a de la pièce inférieure de retenue 9. Avantageusement, la troisième portion 9c de la pièce inférieure de retenue 9, est plane et s'étend dans un plan sensiblement parallèle au plan dans lequel la première portion 9a de la pièce inférieure de retenue 9 s'étend. Comme on peut le voir en figure 3, la troisième portion 9c de la pièce inférieure de retenue 9, est destinée et conformée pour se loger sur la partie de pied de logement 6c de la portion inférieure 4 de la tuile 1 et/ou directement sur la portion inférieure 4 de la tuile 1, en fonction de la géométrie de la tuile 1.

Dans l'exemple illustré en figure 2, la troisième portion 9c de la pièce inférieure de retenue 9 comprend une extrémité libre sur laquelle est agencée un premier élément de retenue 9d d'un module photovoltaïque 101. Avantageusement, le premier élément de retenue 9d se présente sous la forme d'un crochet et est orienté vers la portion centrale 5 de la tuile 1 et la portion supérieure 3 de la tuile 1 de sorte que le premier élément de retenue 9d est configuré pour recevoir un premier bord 101a du module photovoltaïque 101 et de maintenir ledit premier bord 101a uniquement par encastrement dudit premier bord 101a dans le premier élément de retenue 9d.

Comme on peut le voir notamment en figure 6 à l'état monté mais on peut également le déduire des figures 2 et 3, la pièce supérieure 10 du dispositif de retenue 8 est agencée à distance de la pièce inférieure de retenue 9. Tout comme la pièce inférieure de retenue 9, la pièce supérieure de retenue 10 du dispositif de retenue 8 se présente sous la forme globale d'une languette. En outre, la pièce supérieure de retenue 10 du dispositif de retenue 8 comprend une première portion 10a configurée pour être agencée en regard de la première portion 9a de la pièce inférieure de retenue 9 du dispositif de retenue 8. Par ailleurs, la pièce supérieure de retenue 10 comprend en outre une deuxième portion 10b agencée dans le prolongement de la première portion 10a de la pièce supérieure de retenue 10, la deuxième portion 10b de la pièce supérieure de retenue 10 étant configurée pour être positionnée en regard d'au moins une partie de la deuxième portion 9b de la pièce inférieure de retenue 9 du dispositif de retenue 8, la première portion 10a de la pièce supérieure de retenue 10 et la deuxième portion 10b de la pièce supérieure de retenue 10 s'étendant dans des plans parallèles.

Selon une caractéristique de l'invention illustrée notamment figure 2, la deuxième portion 10b de la pièce supérieure de retenue 10 comprend à une extrémité libre un retour 10c orienté vers la première portion 10a de la pièce supérieure de retenue 10. En outre, la deuxième portion 10b de la pièce supérieure de retenue 10 comprend deux ailettes 10d positionnées de part et d'autre de la deuxième portion 10b et agencées latéralement par rapport à la deuxième portion 10b et configurée pour fermer partiellement le volume interne 11 du dispositif de retenue 8.

Par ailleurs, dans l'exemple illustré en figure 2, un deuxième élément de retenue 10f d'un module photovoltaïque 101, est agencé sur la pièce supérieure de retenue 10 du dispositif de retenue 8 et préférentiellement sur l'extrémité libre de la première portion 10a de la pièce supérieure de retenue 10. Le deuxième élément de retenue 10f se présente sous la forme d'une extension et est orienté vers la portion centrale 5 et la portion inférieure 4 de la tuile 1 de sorte que le deuxième élément de retenue 10f est configuré pour recevoir un deuxième bord 101b du module photovoltaïque 101 et de maintenir ledit deuxième bord 101b uniquement par encastrement dudit deuxième bord 101b dans le deuxième élément de retenue 10f.

Comme illustré aux figures 2 et 3, le dispositif de retenue 8 est réalisé en deux pièces jointes ensemble constituant respectivement la pièce inférieure de retenue 9 et la pièce supérieure de retenue 10 du dispositif de retenue 8, la liaison des deux pièces étant préférentiellement modifiable. Dans cette forme de réalisation, la pièce inférieure de retenue 9 comprend deux éléments de liaison 12a, 12b, disposés de part et d'autre de la première portion 9a de la pièce inférieure de retenue 9 du dispositif de retenue 8 et configurés pour relier la pièce inférieure de retenue 9 avec la pièce supérieure de retenue 10 du dispositif de retenue 8. Chaque élément de liaison 12a, 12b s'étend en saillie depuis la première portion 9a de la pièce inférieure de retenue 9 du dispositif de retenue 8 dans un plan sensiblement perpendiculaire à celui dans lequel la première portion 9a s'étend. Chaque élément de liaison 12a, 12b est conformé pour coopérer par complémentarité de forme avec un élément de liaison complémentaire 13a, 13b équipant la pièce supérieure de retenue 10 du dispositif de retenue 8. Chaque élément de liaison complémentaire 13a, 13b s'étend en saillie depuis la première portion 10a de la pièce supérieure de retenue 10 du dispositif de retenue 8 dans un plan sensiblement perpendiculaire à celui dans lequel la première portion 10a s'étend et sont disposés de part et d'autre de la première portion 10a de la pièce supérieure de retenue 10 du dispositif de retenue 8. Ainsi, lors du montage, la pièce supérieure de retenue 10 est clippée sur la pièce inférieure de retenue 9 via les éléments de liaison 12a, 13a, 12b, 13b.

Dans une variante non représentée, le dispositif de retenue 8 peut être réalisé en une pièce d'un seul tenant. Dans cette variante, la pièce inférieure de retenue 9 et la pièce supérieure de retenue 10 du dispositif de retenue 8 sont réalisées d'un seul tenant sous la forme d'un profilé usiné et le dispositif de retenue 8 comprend préférentiellement deux éléments de liaison, configurés pour relier la pièce inférieure de retenue 9 avec la pièce supérieure de retenue 10 du dispositif de retenue 8. Dans cette variante, chaque élément de liaison s'étend en saillie depuis la première portion 9a de la pièce inférieure de retenue 9 du dispositif de retenue 8 dans un plan sensiblement perpendiculaire à celui dans lequel la première portion 9a s'étend jusqu'à la première portion 10a de la pièce supérieure de retenue 10 du dispositif de retenue 8, de manière à créer deux liaisons latérales entre la première portion 9a de la pièce inférieure de retenue 9 et la première portion 10a de la pièce supérieure de retenue 10.

En figure 3 est illustrée la tuile 1 selon l'invention avec le dispositif de retenue 8. Le logement 6 est conformé pour recevoir en encastrement partiel ou total le dispositif de retenue 8 de sorte que la pièce supérieure de retenue 10 du dispositif de retenue 8 forme un méplat sur le galbe 1a de la tuile 1. Préférentiellement, la pièce inférieure de retenue 9 du dispositif de retenue 8 est fixée dans le logement 6 de la tuile 1 de manière permanente par exemple par collage.

Lors de la construction de la toiture, on positionne un ou plusieurs rangs de tuiles standards 102 et on sélectionne les zones de positionnement du module photovoltaïque 101. En fonction de la sélection des zones et de la taille du module photovoltaïque 101, on place au moins deux tuiles 1 selon l'invention dans au moins un rang de tuiles, les tuiles 1 selon l'invention étant déjà équipées d'au moins la pièce inférieure de retenue 9 du dispositif de retenue 8 ou non. Une fois le rang de tuile avec les tuiles spécifiques à l'invention complété, on positionne la pièce inférieure de retenue 9 du dispositif de retenue 8 ou le dispositif de retenue 8 dans les tuiles spécifiques à l'invention si cela n'est pas déjà fait. Puis, on encastre le module photovoltaïque 101 dans les éléments de retenue 9d, 10f prévus à cet effet, et on glisse la connectique 103 du module 101 dans le volume interne 11 du dispositif de retenue 8 équipant l'une des tuiles spécifiques à l'invention comme illustré en figures 4 et 6. Puis, si cela n'est pas fait, on ferme le volume interne 11 du dispositif de retenue 8 avec la pièce supérieure de retenue 10 du dispositif de retenue 8. Avant la dernière étape, on connecte les tuiles électriquement en série. Enfin, on sécurise le dispositif de retenue 8 de chaque tuile 1 spécifique à l'invention en plaçant les tuiles du rang supérieur pour compléter la toiture comme illustré en figure 5.

Dans l'exemple illustré en figure 4, l'ensemble selon l'invention comprend deux tuiles 1 à emboîtement selon l'invention et une tuile standard 102 intercalaire positionnée entre les deux tuiles 1 à emboîtement selon l'invention, et un module photovoltaïque 101. Dans cet exemple, l'entraxe entre tuiles 1, 102 est variable. Avantageusement, la tuile supérieure 102 peut glisser longitudinalement, en fonction de pas de montage (pureau) adapté à une toiture quelconque. En outre, la position du module photovoltaïque 101 est indexée sur la tuile 1 à gauche en se référant à l'illustration de la figure 4, pour garantir la sortie des câbles dans le cheminement qui les conduit sous la tuile 102 située au dessus. A l'inverse, la tuile 1 selon l'invention à droite, en se référant à la figure 4, a une position libre vis-à-vis du module photovoltaïque 101, ce qui autorise donc un pas relatif des tuiles variable pour s'adapter aux dimensions de la toiture.

Dans l'exemple illustré en figure 5, est représenté le même montage qu'en figure 4, avec deux tuiles standards 102 disposées au rang supérieur. En fonction des modèles et de leur largeur de tuiles 1 selon l'invention et des tuiles standards 102 identiques dans leur forme, on peut omettre la tuile standard intercalaire 102 entre les deux tuiles 1 selon l'invention. A l'inverse, on pourrait, dans le cas d'un module photovoltaïque 101 très large, mettre une troisième tuile 1 selon l'invention et/ou d'autres tuiles standards intercalaires 102.

La figure 6 illustre une vue en coupe selon l'axe A-A de la figure 5. Dans cette illustration, on peut mieux voir certains détails de montage qui vont être décrits ci-après. Conformément à la figure 6, la deuxième portion 10b de la pièce supérieure de retenue 10 du dispositif de retenue 8 coopère avec une tuile 102, de la toiture d'un rang supérieur à celui de la tuile 1 selon l'invention. Plus particulièrement, le dispositif de retenue 8 coopère directement avec tuile 102 de la toiture d'un rang supérieur. Avantageusement, la tuile 102 de la toiture d'un rang supérieur recouvre partiellement la tuile 1 selon l'invention de manière à sécuriser la fermeture du dispositif de retenue 8. En outre, la connectique 103 du module photovoltaïque 101 est logée dans le volume interne 11 du dispositif de retenue 8 et entre la pièce inférieure de retenue 9 et la pièce supérieure de retenue 10 du dispositif de retenue 8. Le câble de connectique 103 chemine sous le module photovoltaïque 101, puis sous la pièce supérieure de retenue 10 pour ressortir en zone protégée sous le toit, de sorte que les connecteurs 104 ne soient pas exposés à l'humidité.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Tuile (1) de toiture à emboîtement, comprenant au moins un corps (2) comprenant :
- une portion supérieure (3) sur laquelle est ménagé un bord de tête (3a),
- une portion inférieure (4) sur laquelle est ménagé un bord de pied (4a) opposé au bord de tête (3a),
- une portion centrale (5) agencée entre la portion supérieure (3) et la portion inférieure (4),
**caractérisée en ce que** la tuile (1) comprend en outre:
- au moins un logement (6) comprenant une première partie dite partie de centrale de logement (6a) s'étendant sur la portion centrale (5) du corps (2) de la tuile (1) et une deuxième partie dite partie de tête de logement (6b) contiguë à la partie de centrale de logement (6a) et se présentant sous la forme d'un canal s'étendant depuis la partie de centrale de logement (6a) jusqu'au bord de tête (3a),
- au moins un dispositif de retenue (8) d'au moins une partie d'un module photovoltaïque (101), le dispositif de retenue (8) comprenant au moins une partie inférieure de retenue (9) configurée pour être fixée dans le logement (6), au moins une partie supérieure de retenue (10) reliée à la partie inférieure de retenue (9) et délimitant avec la partie inférieure de retenue (9) un volume interne (11) conformé pour loger au moins partiellement une connectique (103) de module photovoltaïque (101), la pièce inférieure de retenue (9) comprenant au moins un élément de liaison (12a, 12b) configuré pour relier la partie inférieure de retenue (9) avec la partie supérieure de retenue (10), le dispositif de retenue (8) comprenant au moins un premier élément de retenue (9d) d'un premier bord (101a) de module photovoltaïque (101) et au moins un deuxième élément de retenue (10f) d'un deuxième bord (101b) opposé de module photovoltaïque (101), le premier élément de retenue (9d) étant agencé sur la partie inférieure de retenue (9) et le deuxième élément de retenue (10f) étant agencé sur la partie supérieure de retenue (10), ledit dispositif de retenue (8) étant conformé pour être logé au moins partiellement dans le logement (6) de manière à combler au moins partiellement, et préférentiellement entièrement, le logement (6).

2. Tuile selon la revendication précédente, dans laquelle le dispositif de retenue (8) est réalisé en une pièce d'un seul tenant ou en au moins deux pièces jointes ensemble.

3. Ensemble de toiture comprenant au moins une tuile (1) selon l'une quelconque des revendications précédentes et un module photovoltaïque (101) comprenant une connectique (103) et au moins un premier bord (101a) et un deuxième bord (101b) opposé audit premier bord, ledit module photovoltaïque étant agencé au moins en partie tangentiellement ou sur la tuile (1), de sorte que le volume interne (11) du dispositif de retenue (8) de la tuile (1) est conformé pour loger au moins partiellement la connectique (103) du module photovoltaïque (101) et le premier élément de retenue (9d) et le deuxième élément de retenue (10f) étant configurés pour coopérer respectivement avec le premier bord (101a) du module photovoltaïque (101) et le deuxième bord (101b) du module photovoltaïque (101).

4. Ensemble selon la revendication précédente, comprenant au moins deux tuiles (1) selon l'une quelconque des revendications 1 à 2 agencées à distance l'une de l'autre ou adjacentes latéralement de sorte que le module photovoltaïque (101) est maintenu par au moins deux dispositifs de retenue (8) équipant chacun une tuile (1).

5. Ensemble selon la revendication 4, dans lequel chaque tuile (1) de l'ensemble est conformée pour permettre une variation d'un entraxe latéral avec une tuile adjacente.

## Patentansprüche

1. Falzdachziegel (1), umfassend mindestens einen Körper (2), der Folgendes umfasst:
- Einen oberen Abschnitt (3), an dem eine Kopfkante (3a) vorgesehen ist,
- einem unteren Abschnitt (4), an dem gegenüber der Kopfkante (3a) eine Fußkante (4a) vorgesehen ist,
- einen zentralen Abschnitt (5), der zwischen dem oberen Abschnitt (3) und dem unteren Abschnitt (4) angeordnet ist,
**dadurch gekennzeichnet, dass** der Ziegel (1) ferner Folgendes umfasst:
- Mindestens ein Gehäuse (6), umfassend einen ersten Teil, den zentralen Gehäuseteil (6a), der sich über den zentralen Abschnitt (5) des Körpers (2) der Ziegel (1) erstreckt, und einen zweiten Teil, den Gehäusekopfteil (6b), der an den zentralen Gehäuseteil (6a) angrenzt und die Form eines Kanals aufweist, der sich vom zentralen Gehäuseteil (6a) bis zur Kopfkante (3a) erstreckt,
- mindestens eine Haltevorrichtung (8) mindestens eines Teils eines Photovoltaikmoduls (101), wobei die Haltevorrichtung (8) mindestens ein unteres Halteteil (9), das dazu eingerichtet ist, im Gehäuse (6) fixiert zu werden, und mindestens ein oberes Halteteil (10) umfasst, das mit dem unteren Halteteil (9) verbunden ist und mit dem unteren Halteteil (9) ein Innenvolumen (11) abgrenzt, das ausgebildet ist, um einen Steckverbinder (103) des Photovoltaikmoduls (101) mindestens teilweise aufzunehmen, wobei das untere Haltestück (9) mindestens ein Verbindungselement (12a, 12b) umfasst, das dazu eingerichtet ist, das untere Halteteil (9) mit dem oberen Halteteil (10) zu verbinden, wobei die Haltevorrichtung (8) mindestens ein erstes Halteelement (9d) einer ersten Kante (101a) des Photovoltaikmoduls (101) und mindestens ein zweites Halteelement (10f) einer gegenüberliegenden zweiten Kante (101b) des Photovoltaikmoduls (101) umfasst, wobei das erste Halteelement (9d) am unteren Halteteil (9) angeordnet ist und das zweite Halteelement (10f) am oberen Halteteil (10) angeordnet ist, wobei die Haltevorrichtung (8) ausgebildet ist, um mindestens teilweise in dem Gehäuse (6) untergebracht zu werden, um das Gehäuse (6) mindestens teilweise und vorzugsweise vollständig auszufüllen.

2. Ziegel nach dem vorhergehenden Anspruch, wobei die Haltevorrichtung (8) einstückig oder aus mindestens zwei miteinander verbundenen Stücken gefertigt ist.

3. Dachanordnung, umfassend mindestens einen Ziegel (1) nach einem der vorhergehenden Ansprüche und ein Photovoltaikmodul (101), umfassend einen Steckverbinder (103) und mindestens eine erste Kante (101a) und eine gegenüberliegende zweite Kante (101b), wobei das Photovoltaikmodul mindestens teilweise tangential oder auf dem Ziegel (1) angeordnet ist, so dass das Innenvolumen (11) der Haltevorrichtung (8) des Ziegels (1) ausgebildet ist, um den Steckverbinder (103) des Photovoltaikmoduls (101) mindestens teilweise aufzunehmen, und das erste Halteelement (9d) und das zweite Halteelement (10f) dazu eingerichtet sind, jeweils mit der ersten Kante (101a) des Photovoltaikmoduls (101) und der zweiten Kante (101b) des Photovoltaikmoduls (101) zusammenzuwirken.

4. Anordnung nach dem vorhergehenden Anspruch, umfassend mindestens zwei Ziegel (1) nach einem der Ansprüche 1 bis 2, die im Abstand voneinander oder seitlich nebeneinander angeordnet sind, so dass das Photovoltaikmodul (101) von mindestens zwei Haltevorrichtungen (8) gehalten wird, die jeweils einen Ziegel (1) ausrüsten.

5. Anordnung nach Anspruch 4, wobei jeder Ziegel (1) der Anordnung ausgebildet ist, um eine Variation des seitlichen Achsabstands zu einem benachbarten Ziegel zu ermöglichen.

## Claims

1. An interlocking roof tile (1), comprising at least one body (2) comprising:
- an upper portion (3) on which is formed a head edge (3a),
- a lower portion (4) on which is formed a foot edge (4a) opposite to the head edge (3a),
- a central portion (5) arranged between the upper portion (3) and the lower portion (4),
**characterized in that** the tile (1) further comprises:
- at least one housing (6) comprising a first part called the housing central part (6a) extending over the central portion (5) of the body (2) of the tile (1) and a second part called the housing head part (6b) contiguous to the housing central part (6a) and being in the form of a channel extending from the housing central part (Ga) to the head edge (3a),
- at least one retaining device (8) of at least one part of a photovoltaic module (101), the retaining device (8) comprising at least one retaining lower part (9) configured to be fastened in the housing (6), at least one retaining upper part (10) connected to the retaining lower part (9) and delimiting with the retaining lower part (9) an internal volume (11) shaped to at least partially house a connector (103) of the photovoltaic module (101), the retaining lower part (9) comprising at least one connecting element (12a, 12b) configured to connect the retaining lower part (9) with the retaining upper part (10), the retaining device (8) comprising at least one first retaining element (9d) of a first edge (101a) of the photovoltaic module (101) and at least one second retaining element (10f) of a second opposite edge (101b) of the photovoltaic module (101), the first retaining element (9d) being arranged on the retaining lower part device (9) and the second retaining element (10f) being arranged on the retaining upper part (10), said retaining device (8) being shaped to be housed at least partially in the housing (6) so as to at least partially, and preferably entirely, fill the housing (6).

2. The tile according to the preceding claim, wherein the retaining device (8) is made in one piece in one piece or in at least two pieces joined together.

3. A roof assembly comprising at least one tile (1) according to any one of the preceding claims and a photovoltaic module (101) comprising a connector (103) and at least one first edge (101a) and one second edge (101b) opposite to said first edge, said photovoltaic module being arranged at least partially tangentially or on the tile (1), so that the internal volume (11) of the retaining device (8) of the tile (1) is shaped to at least partially house the connector (103) of the photovoltaic module (101) and the first retaining element (9d) and the second retaining element (10f) being configured to cooperate respectively with the first edge (101a) of the photovoltaic module (101) and the second edge (101 b) of the photovoltaic module (101).

4. The assembly according to the preceding claim, comprising at least two tiles (1) according to any one of claims 1 to 2 arranged at a distance from each other or laterally adjacent so that the photovoltaic module (101) is held by at least two retaining devices (8) each fitted to one tile (1).

5. The assembly according to claim 4, wherein each tile (1) of the assembly is shaped to enable a variation of a lateral center distance with an adjacent tile.
